# EUROPÄISCHE PATENTSCHRIFT

(11) **EP 4 269 699 B1**
(45) Veröffentlichungstag und Bekanntmachung des Hinweises auf die Patenterteilung: **14.08.2024**
(21) Anmeldenummer: 22170083.4
(22) Anmeldetag: 26.04.2022
(51) Int. Cl.: E02D 15/04, E02D 17/00, E02D 17/13

(54) **TIEFBAUMASCHINE**
MACHINE FOR USE IN CIVIL ENGINEERING
ENGIN DE GÉNIE CIVIL

(43) Veröffentlichungstag der Anmeldung: 01.11.2023
(73) Patentinhaber: BAUER Maschinen GmbH, 86529 Schrobenhausen (DE)
(72) Erfinder: Peyerl, Andreas, 86558 Hohenwart (DE)
(74) Vertreter: Wunderlich & Heim Patentanwälte PartG mbB

(56) Entgegenhaltungen:
- EP-A1- 0 592 326
- EP-A1- 3 208 384
- EP-B1- 3 425 123
- WO-A1-2014/199078

## Beschreibung

Die Erfindung betrifft eine Tiefbaumaschine mit einer mobilen Trägereinheit, welche einen als Fahrwerk ausgebildeten Unterwagen, einen darauf angeordneten Oberwagen und einen Ausleger aufweist, welcher schwenkbar um eine horizontale Schwenkachse gelagert ist, einem Arbeitsgerät zum Tiefbau, welches an dem Ausleger mittels eines Tragseiles vertikal verstellbar aufgehängt ist, wobei das Tragseil mittels einer Seilwinde an der Trägereinheit betätigbar ist, einer drehbaren ersten Schlauchtrommel mit einer ersten Schlauchleitung, welche von der ersten Schlauchtrommel zum Arbeitsgerät geführt ist, und einer drehbaren zweiten Schlauchtrommel mit einer zweiten Schlauchleitung, welche von der zweiten Schlauchtrommel zum Arbeitsgerät geführt ist, gemäß dem Oberbegriff des Anspruchs 1.

Derartige Tiefbaumaschinen weisen zwei Schlauchtrommeln auf, welche beispielweise zum Zuführen oder Abführen von abgetragenem Bodenmaterial zusammen mit Stützflüssigkeit oder zum Zuführen entsprechender Stützflüssigkeit, einer aushärtbaren Suspension oder zur Zu- und Abführung von Hydraulikflüssigkeit zu einem am Ausleger aufgehängten Arbeitsgerät dienen. Die Schlauchleitungen können dabei einen Leitungsdurchmesser von mehreren Zentimetern, insbesondere zwischen 2 cm und 20 cm aufweisen.

Bei Arbeitstiefen von 20 Metern und mehr ergeben sich relativ große Schlauchtrommeln, welche einen Außendurchmesser von mehreren Metern aufweisen, um die benötigten Schlauchlängen durch Abrollen bereitzustellen beziehungsweise durch Aufrollen wieder aufzunehmen.

Beim Einsatz von zwei Schlauchtrommeln werden diese in der Regel nebeneinander parallel oder angewinkelt am Oberwagen angeordnet. Gegenüber dem mittig an der

Trägereinheit aufgehängten Arbeitsgerät ergibt sich so ein gewisser Einlaufwinkel der Schlauchleitung gegenüber der Längsachse der Trägereinheit. Hierdurch können sich Querkräfte und Torsionsmomente auf das mittig aufgehängte Arbeitsgerät ergeben. Insbesondere beim Einsatz einer Schlitzwandfräse, mit welcher positionsgenau möglichst parallel oder fluchtend zueinander verlaufende Schlitze im Boden erstellt werden sollen, können sich unerwünschte Abweichungen ergeben. In jedem Fall wird mit einem stärker zunehmenden Einlaufwinkel der Schlauchleitung gegenüber der Längsachse eine exakte Ausrichtung und Führung des Arbeitsgerätes erschwert.

Aus der EP 0 518 292 B1 ist eine Tiefbaumaschine mit einer Schlitzwandfräse bekannt, wobei eine Schlauchtrommel um eine horizontale Drehachse und eine weitere Schlauchtrommel um eine vertikale Drehachse angeordnet sind.

Aus der EP 3 425 123 B1 ist eine Tiefbaumaschine zu entnehmen, welche eine Trägereinheit mit einem schwenkbaren oder kippbaren Ausleger aufweist. Der Ausleger weist in einem Mittenbereich eine Ausnehmung auf, in welcher eine einzelne Schlauchtrommel mittig gelagert ist. Weiter wird in der EP 0 592 326 A1 eine dem Tiefbaumaschine entsprechend dem Anspruch 1 behandelt. H

Der Erfindung liegt die **Aufgabe** zugrunde, eine Tiefbaumaschine mit zwei Schlauchtrommeln anzugeben, welche einen kompakten Aufbau aufweist und eine gute Führung des Arbeitsgerätes an einem Ausleger ermöglicht.

Die Aufgabe wird durch eine Tiefbaumaschine mit den Merkmalen des Anspruchs 1 gelöst. Bevorzugte Ausführungsformen der Erfindung sind in den abhängigen Ansprüchen angegeben.

Die erfindungsgemäße Tiefbaumaschine ist dadurch gekennzeichnet, dass die zwei Schlauchtrommeln und die Seilwinde mittig entlang einer Längsachse der Trägereinheit angeordnet sind und dass die Seilwinde für das Tragseil in Längsrichtung zwischen der ersten Schlauchtrommel und der zweiten Schlauchtrommel angeordnet ist.

Eine Grundidee der Erfindung liegt darin, die zwei Schlauchtrommeln etwa mittig entlang der Längsachse der Trägereinheit anzuordnen, wobei zudem die Seilwinde für das Tragseil zwischen den zwei Schlauchtrommeln angeordnet ist. Hierdurch können die Schlauchleitungen parallel zur Längsachse oder mit einem relativ geringen Anstellwinkel zur Längsachse zum Arbeitsgerät zugeführt oder von diesem wieder aufgespult werden. Dies erlaubt ein besonders effizientes und schonendes Auf- und Abrollen der Schlauchleitungen sowie auch des Tragseiles. Hierdurch reduzieren sich entsprechend Querkräfte und Torsionskräfte, welche auf das Arbeitsgerät einwirken und dieses von einer eingestellten Lage ablenken können. Zudem wird eine Reduktion von Verschleiß der Schlauchleitungen und des Tragseiles durch ein lagengenaues Aufrollen erreicht.

Gemäß einer Ausführungsform der Erfindung ist vorgesehen, dass zumindest die zweite Schlauchtrommel am Oberwagen drehbar gelagert ist. Die zweite Schlauchtrommel kann sich dabei in einem hinteren Bereich am Oberwagen befinden. Die mindestens eine Schlauchtrommel kann dabei um eine bei normaler Anordnung der Tiefbaumaschine horizontale Trommelachse drehbar gelagert sein. Die Trommelachse der beiden Schlauchtrommeln ist parallel zueinander und insbesondere auch parallel zur horizontalen Schwenkachse des Auslegers, mit welchem dieser insbesondere am Oberwagen gelagert ist. Es besteht zudem eine senkrechte Ausrichtung der Trommelachsen zur Längsachse der Trägereinheit.

Bei der erfindungsgemäßen Reihenanordnung der Schlauchtrommeln entlang der Längsachse ergibt sich eine besonders kompakte Anordnung nach einer Ausführungsvariante der Erfindung dadurch, dass die erste Schlauchtrommel in einer Mittenöffnung an dem Ausleger drehbar gelagert ist. Die Schlauchtrommel ist insbesondere mittig zu einer Mittenlängsachse des Auslegers in der Mittenausnehmung gelagert. Hierdurch reduziert sich der Platzbedarf am Oberwagen, so dass insbesondere die zweite Schlauchtrommel und auch die Seilwinde für das Tragseil effizient am Oberwagen gelagert werden können. Eine mittige Lagerung im Sinne der Erfindung liegt zumindest dann vor, wenn die mittige Längsachse oder Längsebene der Trägereinheit durch den Bereich der Schlauchtrommeln und der Seilwinde verläuft, besonders bevorzugt durch deren axiale Mitte.

Eine besonders gute Führung der Schlauchleitungen und des Tragseiles wird nach einer Weiterbildung der Erfindung dadurch erreicht, dass an einem oberen Endbereich des Auslegers mindestens eine Seilumlenkrolle für das Tragseil gelagert ist und dass unterhalb der Seilumlenkrolle eine erste Schlauchumlenkrolle für die erste Schlauchleitung und oberhalb der Seilumlenkrolle eine zweite Schlauchumlenkrolle für die zweite Schlauchleitung gelagert ist. Die Umlenkrollen sind insbesondere drehbar gelagert. Zur Führung können jeweils auch mehr als eine Umlenkrolle vorgesehen sein, insbesondere zwei nebeneinander liegende Seilumlenkrollen. Durch diese Anordnung wird eine mittige Führung der beiden Schlauchleitungen und des Tragseiles erzielt, ohne dass Überschneidungen der Leitungen auftreten.

Eine besonders kompakte Ausgestaltung der Tiefbaumaschine ergibt sich nach einer Ausführungsform der Erfindung dadurch, dass zumindest die zweite Schlauchtrommel in einer horizontalen Richtung nicht über die Umfangsabmessungen der Trägereinheit hinausragt. Insbesondere bei der Anordnung der ersten Schlauchtrommel am Ausleger kann auch eine größere zweite Schlauchtrommel derart am Oberwagen angeordnet werden, dass eine Außenkontur der zweiten Schlauchtrommel nicht über die horizontalen Umfangsabmessungen der Trägereinheit, also über die Länge und Breite der Trägereinheit, hinaussteht. Somit können die horizontalen Umfangsabmessungen der Tiefbaumaschine kompakt gehalten werden. Die Tiefbaumaschine kann so auch an Baustellen mit beengten Raumverhältnissen effizient eingesetzt werden.

Grundsätzlich kann der Oberwagen auf dem Unterwagen fest angeordnet sein. Eine gute Verstellbarkeit wird bei der Tiefbaumaschine nach einer Weiterbildung der Erfindung dadurch erzielt, dass der Oberwagen drehbar um eine Vertikalachse auf dem Untennragen gelagert ist. Insbesondere in Kombination mit der nicht überstehenden Schlauchtrommel kann so auch bei begrenzten Raumverhältnissen an einer Baustelle eine gute Verstellbarkeit erzielt werden.

Die Schlauchleitungen können grundsätzlich als ein Einzelschlauch ausgebildet sein. Gemäß einer Ausführungsvariante der Erfindung ist es ebenfalls vorgesehen, dass mindestens eine Schlauchleitung als ein Schlauchband oder ein Schlauchbündel mit mehreren Leitungen ausgebildet ist.

Besonders bevorzugt ist es weiterhin, dass mindestens eine Schlauchleitung einen hohlen Schlauchinnenraum umfasst und insbesondere als Förderleitung ausgebildet ist. In dem Innenraum einer Schlauchleitung kann jedoch auch eine Datenleitung oder eine Energieleitung angeordnet sein. Bei der Verwendung eines Schlauchbandes können verschiedene schlauchartige Leitungen bandartig nebeneinander angeordnet sein. Die Leitungen können dabei jeweils als Förderleitung, als Datenleitung oder als Energieleitung ausgebildet sein. Bei einem Schlauchbündel sind die Leitungen nicht nebeneinander, sondern bündelartig und vorzugsweise um eine Mittenachse herum angeordnet.

Die mobile Trägereinheit kann zum Bilden eines Landfahrzeuges am Unterwagen eine Radanordnung zum Fahren entlang von Straßen oder Schienen aufweisen. Besonders bevorzugt ist es nach einer Weiterbildung der Erfindung, dass der Unterwagen ein Raupenfahrwerk aufweist. Dies erlaubt eine besonders gute Geländegängigkeit und Standsicherheit bei geringer Bodenpressung. Zum Bilden eines Wasserfahrzeuges kann der Unterwagen als ein Schwimmkörper, etwa als Barke oder Schiff, ausgebildet sein.

Als Arbeitsgerät kann an der Tiefbaumaschine grundsätzlich jedes Arbeitsgerät für den Tiefbau eingesetzt werden, welches zur Versorgung mindestens zwei Schlauchleitungen benötigt. Besonders zweckmäßig ist es nach einer Ausführungsform der Erfindung, dass das Arbeitsgerät als eine Schlitzwandfräse oder als ein Bohrgerät, insbesondere ein Imlochbohrgerät, ausgebildet ist. Eine Schlitzwandfräse weist am unteren Ende eines Tragrahmens insbesondere zwei drehend antreibbare Fräsradpaare auf. Abhängig von der Antriebsart kann eine erste Schlauchleitung beispielsweise als eine Leitung zum Zu- und Abführen von Hydraulikflüssigkeit und eine zweite Schlauchleitung als eine Förderleitung ausgebildet sen. Die Förderleitung kann zum Absaugen von abgefrästem Bodenmaterial zusammen mit umgebender Stützflüssigkeit oder zur Zuführung einer aushärtbaren Suspension dienen, etwa wenn das abgefräste Bodenmaterial in situ im Schlitz zu einem Bodenmörtel vermengt wird.

In entsprechender Weise kann ein Imlochbohrgerät mit Hydraulikfluid zum Betreiben des Bohrantriebes unmittelbar am Bohrgerät versorgt werden. Bohrklein kann über eine entsprechende Abförderleitung abgefördert werden.

Grundsätzlich kann eine Nutzung der ersten Schlauchleitung und der zweiten Schlauchleitung frei und allein abhängig von den Gegebenheiten an dem jeweiligen Arbeitsgerät genutzt werden. Besonders zweckmäßig ist es nach einer Weiterbildung der Erfindung, dass die erste Schlauchleitung zum Fördern von Hydraulikflüssigkeit und die zweite Schlauchleitung zum Fördern der Fräs- beziehungsweise Bohrflüssigkeit ausgebildet sind. Das Vorsehen der zweiten Schlauchleitung als Förderleitung ermöglicht es, dass die zweite Schlauchtrommel, welche in einem vom Ausleger abgewandten Bereich am Oberwagen angeordnet sein kann, effizient mit einer Misch-, Entsandungs- und/oder Entsorgungsanlage zum Zu- beziehungsweise Abführen einer Verfahrensflüssigkeit dient.

Die mindestens eine Schlauchtrommel und die Seilwinde können an einer Oberseite des Oberwagens angeordnet werden. Eine besonders zweckmäßige Ausgestaltung der Erfindung besteht darin, dass an dem Oberwagen eine Tragbalkenanordnung ausgebildet ist, an welcher die Seilwinde und die zweite Schlauchtrommel drehbar gelagert sind. Die Tragbalkenanordnung kann frei von Verkleidungselementen und insbesondere mit einem Grundrahmen der Trägereinheit verbunden sein oder einen Teil hiervon bilden. Die Tragbalkenanordnung kann vorzugsweise einen gegenüber der Horizontalen angewinkelten oberen Lagerbalken aufweisen, an welchem mindestens eine Schlauchtrommel und die Seilwinde mit einem gewissen Höhenversatz zueinander angeordnet sind.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine perspektivische Ansicht einer ersten erfindungsgemäßen Tiefbaumaschine;
- Fig. 2: eine Seitenansicht der Tiefbaumaschine von Fig. 1;
- Fig. 3: eine Draufsicht der Tiefbaumaschine von Fig. 1 und 2 von oben;
- Fig. 4: eine perspektivische Ansicht einer zweiten erfindungsgemäßen Tiefbaumaschine;
- Fig. 5: eine Seitenansicht der Tiefbaumaschine von Fig. 4; und
- Fig. 6: eine Draufsicht der Tiefbaumaschine von Fig. 4 und 5 von oben.

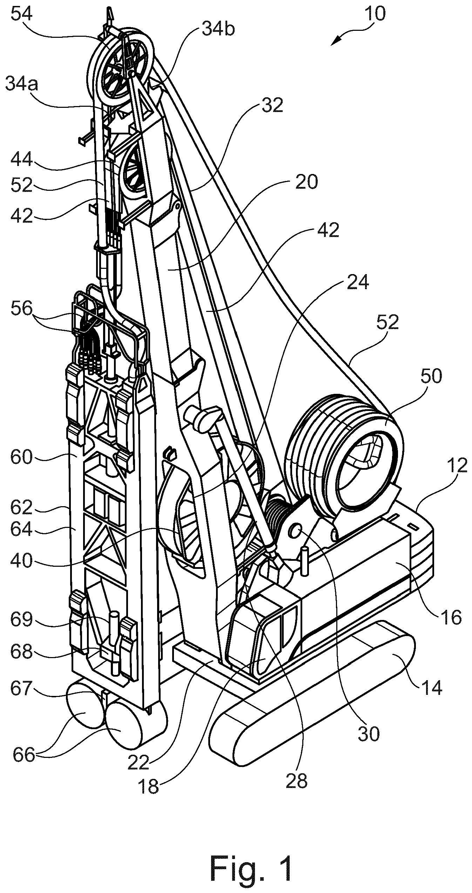

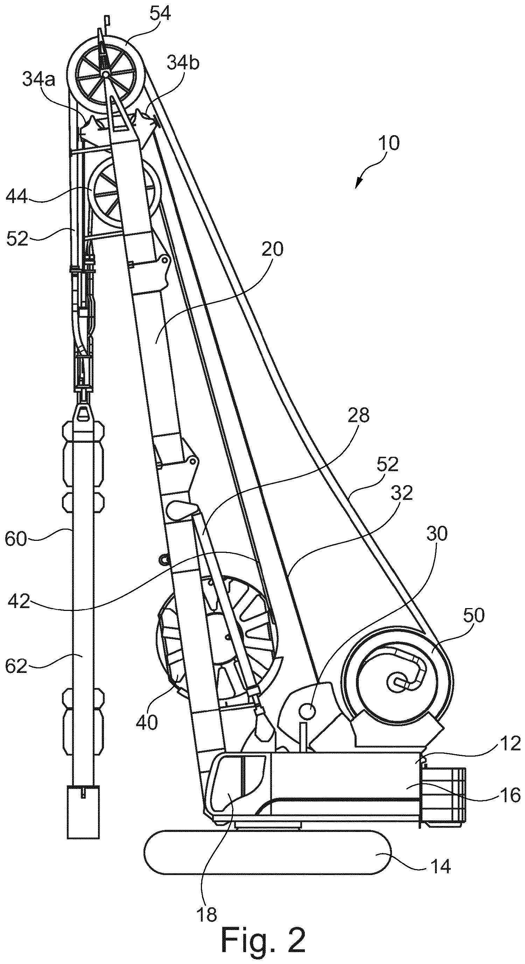

Eine erste erfindungsgemäße Tiefbaumaschine 10 wird in Zusammenhang mit den Figuren 1 bis 3 erläutert. Die Tiefbaumaschine 10 weist eine Trägereinheit 12 mit einem Unterwagen 14 auf. Der Unterwagen 14 kann mit einem Raupenfahrwerk ausgebildet sein. Ein Oberwagen 16 ist vorzugsweise drehbar um eine vertikale Drehachse auf dem Unterwagen 14 gelagert. Am Oberwagen 16 kann an einer Vorderseite eine Bedienkabine 18 für eine Bedienperson angeordnet sein. An der Vorderseite des Oberwagens 16 kann weiterhin um eine nur schematisch angedeutete horizontal in Querrichtung verlaufende Schwenkachse 22 ein Ausleger 20, auch Auslegerarm genannt, schwenkbar angelenkt sein. Ein Anstellwinkel des Auslegers 20 kann über mindestens einen Stellzylinder 28 eingestellt werden, welcher sich von der Trägereinheit 12 zum Ausleger 20 erstreckt.

Gemäß der Erfindung sind an der Tiefbaumaschine 10 eine erste Schlauchtrommel 40, eine zweite Schlauchtrommel 50 und eine dazwischen angeordnete Seilwinde 30 vorgesehen. Die Seilwinde 30 dient zum Betätigen eines Tragseiles 32, welches von der Seilwinde 30 über vorzugsweise zwei Umlenkrollen 34a, 34b an einem oberen Ende des Auslegers 20 bis zu einem daran aufgehängten Arbeitsgerät 60 geführt ist. Durch Betätigen der Seilwinde 30 kann das Arbeitsgerät 60 angehoben und abgesenkt werden.

Gemäß dem dargestellten Ausführungsbeispiel der Tiefbaumaschine 10 ist die erste Schlauchtrommel 40 unmittelbar am Ausleger 20 drehbar gelagert, wobei zur Aufnahme zumindest eines Teils der ersten Schlauchtrommel 40 eine Mittenausnehmung 24 an dem Ausleger 20 ausgebildet ist. Die erste Schlauchtrommel 40 dient zum Aufrollen und Abrollen einer ersten Schlauchleitung 42, welche in dem dargestellten Ausführungsbeispiel als ein sogenanntes Schlauchband aus mehreren Leitungen 56 ausgebildet ist. Über eine erste Schlauchumlenkrolle 44 am Ausleger 20 kann die erste Schlauchleitung 42 unterhalb des Tragseils über den Ausleger 20 zu dem Arbeitsgerät 60 geführt sein. Die erste Seilumlenkrolle 44 für die erste Schlauchleitung 42 ist dabei unterhalb der Seilumlenkrollen 34a, 34b drehbar gelagert.

Am freien Ende der ersten Schlauchleitung 42 wird die bandartige Struktur aufgelöst, so dass die einzelnen Leitungen 56 einzeln mit dem Arbeitsgerät 60 verbunden werden können. Die Leitungen 56 können dabei Förderleitungen für Hydraulikflüssigkeit, elektrische Leitungen und/oder Datenleitungen umfassen. Es kann auch eine gemeinsame Adapter- oder Anschlussplatte hierzu vorgesehen werden.

Der Ausleger 20 ist in dem dargestellten Ausführungsbeispiel an einer Vorderseite des Oberwagens 16 gelenkig mit diesem verbunden. An einem davon abgewandten hinteren Bereich der Trägereinheit 12 ist die zweite Schlauchtrommel 50 für eine zweite Schlauchleitung 52 drehbar gelagert. Die zweite Schlauchleitung 52, welche als eine Förderleitung für eine Verfahrenssuspension ausgebildet sein kann, ist über eine zweite Schlauchumlenkrolle 54 am oberen Ende des Auslegers 20 zu dem Arbeitsgerät 60 geführt. Die zweite Schlauchumlenkrolle 54 ist dabei oberhalb der vorzugsweise zwei Seilumlenkrollen 34a, 34b und der ersten Schlauchumlenkrolle 44 angeordnet.

Bei dem dargestellten Ausführungsbeispiel ist das Arbeitsgerät 60 als eine Schlitzwandfräse 62 mit einem länglichen Fräsenrahmen 64 ausgebildet. An einer Unterseite des Fräsenrahmens 64 sind in grundsätzlich bekannter Weise zwei Fräsradpaare 66 drehend antreibbar gelagert. Zwischen den beiden Fräsradpaaren 66 kann ein Ansaugstutzen 67 zum Ansaugen von abgefrästem Bodenmaterial zusammen mit umgebender Stützflüssigkeit angeordnet sein. Zum Ansaugen kann an dem Fräsrahmen 64 eine Absaugpumpe 68 angeordnet sein. Über ein nur teilweise dargestelltes Absaugrohr 69 kann die angesaugte Mischung aus Flüssigkeit und abgefrästem Bodenmaterial entlang des Rahmens zu einem oberen Endbereich der Schlitzwandfräse 62 bis zu der angeschlossenen zweiten Schlauchleitung 52 geführt werden. Über die zweite Schlauchleitung 52 kann das so abgeführte Material zur zweiten Schlauchtrommel 50 abgefördert werden. Im Nabenbereich der zweiten Schlauchtrommel 50 kann in grundsätzlich bekannter Weise ein entsprechender Leitungsanschluss zum Weiterleiten des abgeführten Materials vorgesehen sein.

Über eine entsprechende Anordnung kann grundsätzlich auch eine Suspension über die zweite Schlauchleitung 52 in umgekehrter Weise in einen Bereich zu den Fräsradpaaren 66 zugeführt werden, beispielsweise wenn das abgefräste Bodenmaterial unmittelbar mit einer zugeleiteten aushärtenden Suspension in situ im Schlitz zu einem Bodenmörtel vermengt werden soll.

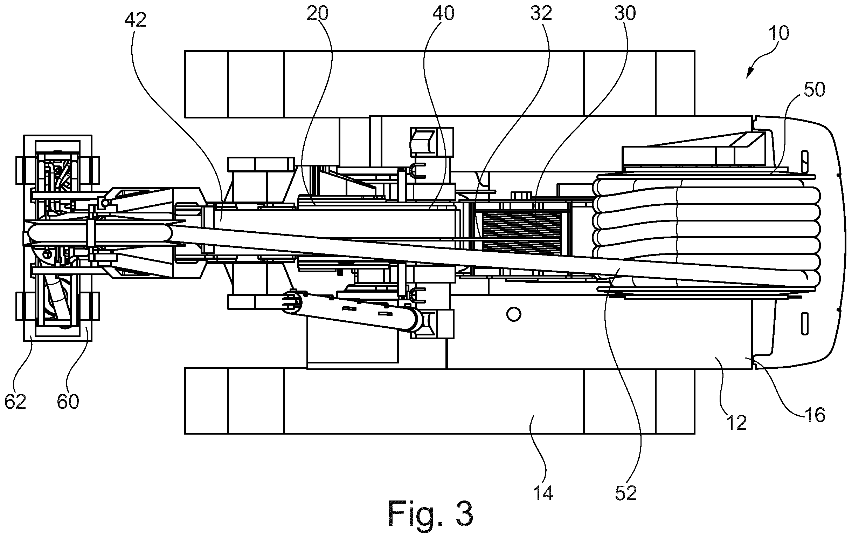

Wie insbesondere anschaulich aus Fig. 3 hervorgeht, sind die zwei Schlauchtrommeln 40, 50 und die axial dazwischen angeordnete Seilwinde 30 für das Tragseil 32 etwa mittig entlang der Längsachse der Trägereinheit 12 angeordnet. Auf diese Weise können die Schlauchleitungen 42, 52 und das Tragseil 32 weitgehend mittig über den Ausleger 20 zu dem Arbeitsgerät 60 geführt werden, so dass eine Übertragung von Querkräften oder Torsionskräften auf das am Tragseil 32 angehängte Arbeitsgerät 60 vermieden oder weitgehend vermieden wird. Dies erlaubt ein besonders verdrehungsfreies Absenken und Anheben des Arbeitsgerätes 60 durch das Tragseil 32.

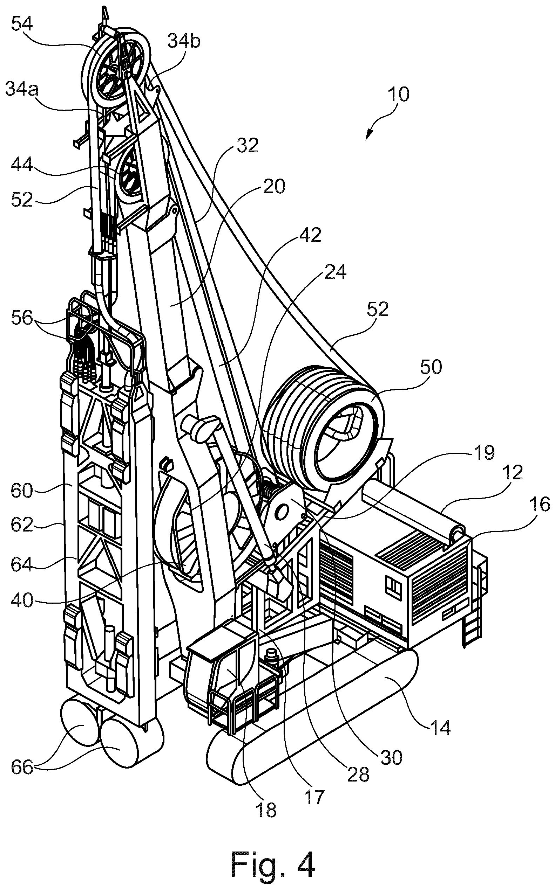

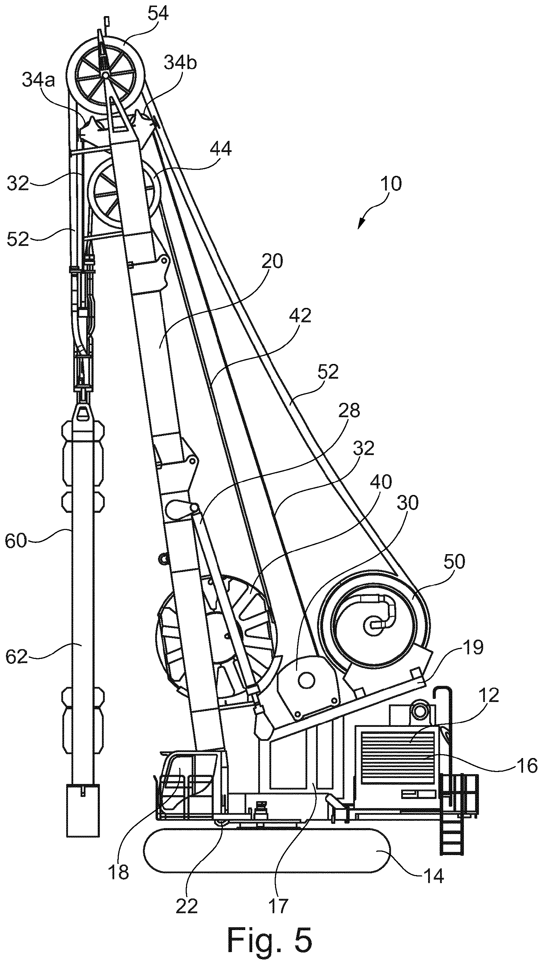

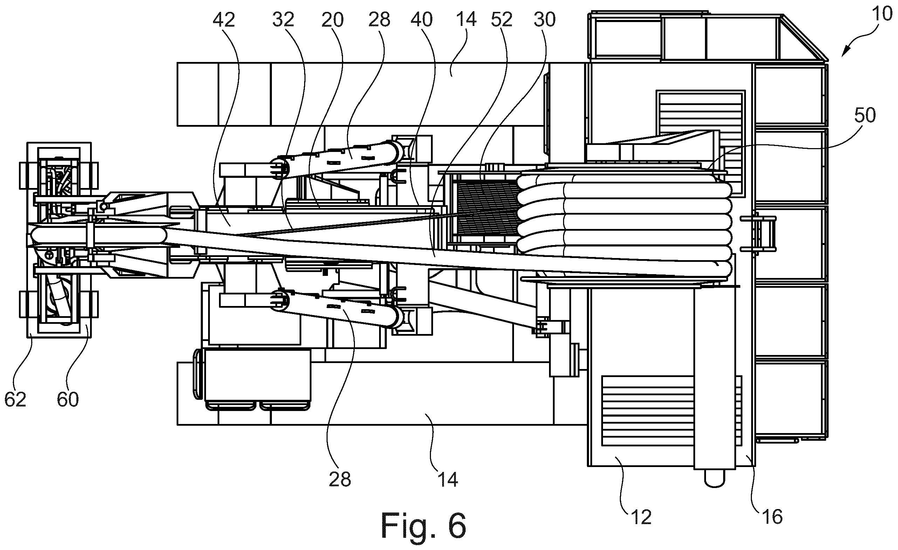

In den Figuren 4 bis 6 ist eine weitere Ausführungsform einer erfindungsgemäßen Tiefbaumaschine 10 dargestellt, deren Aufbau weitgehend dem Aufbau der zuvor beschriebenen Tiefbaumaschine 10 nach den Figuren 1 bis 3 entspricht.

Die Tiefbaumaschine 10 nach den Figuren 4 bis 6 weist ebenfalls eine Trägereinheit 12 mit einem Unterwagen 14 auf. Der Unterwagen 14 kann mit einem Raupenfahrwerk ausgebildet sein. Ein Oberwagen 16 ist vorzugsweise drehbar um eine vertikale Drehachse auf dem Unterwagen 14 gelagert. Am Oberwagen 16 kann an einer Vorderseite eine Bedienkabine 18 für eine Bedienperson angeordnet sein. An der Vorderseite des Oberwagens 16 kann weiterhin um eine nur schematisch angedeutete horizontal in Querrichtung verlaufende Schwenkachse 22 ein Ausleger 20, auch Auslegerarm genannt, schwenkbar angelenkt sein. Ein Anstellwinkel des Auslegers 20 kann über mindestens einen Stellzylinder 28 eingestellt werden, welcher sich von der Trägereinheit 12 zum Ausleger 20 erstreckt.

In Abweichung von dem ersten Ausführungsbeispiel nach den Figuren 1 bis 3 ist ein Mittenbereich des Oberwagens 16 frei von Verkleidungselementen gehalten und mit einer Tragbalkenanordnung 17 versehen. An oberen Tragbalken 19 der Tragbalkenanordnung 17 stützen sich die zwei seitlichen Stellzylinder 28 ab.

An der Tiefbaumaschine 10 sind eine erste Schlauchtrommel 40, eine zweite Schlauchtrommel 50 und eine dazwischen angeordnete Seilwinde 30 vorgesehen. Dabei sind die Seilwinde 30 und die zweite Schlauchtrommel 50 ebenfalls an den oberen Tragbalken 19 der Tragbalkenanordnung 17 drehbar gelagert. Die oberen Tragbalken 19 sind zur Hinterseite des Oberwagens 16 ansteigend, so dass eine höhenversetzte Lagerung der Seilwinde 30 und der zweiten Schlauchtrommel 50 gegeben sind.

Die Seilwinde 30 dient zum Betätigen eines Tragseiles 32, welches von der Seilwinde 30 über vorzugsweise zwei Umlenkrollen 34a, 34b an einem oberen Ende des Auslegers 20 bis zu einem daran aufgehängten Arbeitsgerät 60 geführt ist. Durch Betätigen der Seilwinde 30 kann das Arbeitsgerät 60 angehoben und abgesenkt werden.

Gemäß dem dargestellten Ausführungsbeispiel der Tiefbaumaschine 10 ist die erste Schlauchtrommel 40 unmittelbar am Ausleger 20 drehbar gelagert, wobei zur Aufnahme zumindest eines Teils der ersten Schlauchtrommel 40 eine Mittenausnehmung 24 an dem Ausleger 20 ausgebildet ist. Die erste Schlauchtrommel 40 dient zum Aufrollen und Abrollen einer ersten Schlauchleitung 42, welche auch in diesem Ausführungsbeispiel als ein sogenanntes Schlauchband aus mehreren Leitungen 56 ausgebildet ist. Über eine erste Schlauchumlenkrolle 44 am Ausleger 20 kann die erste Schlauchleitung 42 unterhalb des Tragseils über den Ausleger 20 zu dem Arbeitsgerät 60 geführt sein. Die erste Seilumlenkrolle 44 für die erste Schlauchleitung 42 ist dabei unterhalb der Seilumlenkrollen 34a, 34b drehbar gelagert.

Am freien Ende der ersten Schlauchleitung 42 wird die bandartige Struktur aufgelöst, so dass die einzelnen Leitungen 56 einzeln mit dem Arbeitsgerät 60 verbunden werden können. Die Leitungen 56 können dabei Förderleitungen für Hydraulikflüssigkeit, elektrische Leitungen und/oder Datenleitungen umfassen.

Von der zweiten Schlauchtrommel 50 ist eine zweite Schlauchleitung 52, welche als eine Förderleitung für eine Verfahrenssuspension ausgebildet sein kann, über eine zweite Schlauchumlenkrolle 54 am oberen Ende des Auslegers 20 zu dem Arbeitsgerät 60 geführt. Die zweite Schlauchumlenkrolle 54 ist dabei oberhalb der vorzugsweise zwei Seilumlenkrollen 34a, 34b und der ersten Schlauchumlenkrolle 44 angeordnet.

Auch bei dem zweiten Ausführungsbeispiel ist das Arbeitsgerät 60 als eine Schlitzwandfräse 62 mit einem länglichen Fräsenrahmen 64 und an einer Unterseite des Fräsenrahmens 64 gelagerten zwei Fräsradpaaren 66 ausgebildet. Es gilt das hierzu Ausgeführte entsprechend dem ersten Ausführungsbeispiel.

Die Schlauchtrommeln 40, 50 und die axial dazwischen angeordnete Seilwinde 30 für das Tragseil 32 sind etwa mittig entlang der Längsachse der Trägereinheit 12 angeordnet. Auf diese Weise können die Schlauchleitungen 42, 52 und das Tragseil 32 weitgehend mittig über den Ausleger 20 zu dem Arbeitsgerät 60 geführt werden, so dass eine Übertragung von Querkräften oder Torsionskräften auf das am Tragseil 32 angehängte Arbeitsgerät 60 vermieden oder weitgehend vermieden wird. Dies erlaubt auch bei diesem Ausführungsbeispiel ein besonders verdrehungsarmes Absenken und Anheben des Arbeitsgerätes 60 durch das Tragseil 32.

## Patentansprüche

1. Tiefbaumaschine mit
- einer mobilen Trägereinheit (12), welche einen als Fahrwerk ausgebildeten Unterwagen (14), einen darauf angeordneten Oberwagen (16) und einen Ausleger (20) aufweist, welcher schwenkbar um eine horizontale Schwenkachse (22) gelagert ist,
- einem Arbeitsgerät (60) zum Tiefbau, welches an dem Ausleger (20) mittels eines Tragseiles (32) vertikal verstellbar angehängt ist, wobei das Tragseil (32) mittels einer Seilwinde (30) an der Trägereinheit (12) betätigbar ist,
- einer drehbaren ersten Schlauchtrommel (40) mit einer ersten Schlauchleitung (42), welche von der ersten Schlauchtrommel (40) zum Arbeitsgerät (60) geführt ist, und
- einer drehbaren zweiten Schlauchtrommel (50) mit einer zweiten Schlauchleitung (52), welche von der zweiten Schlauchtrommel (52) zum Arbeitsgerät (60) geführt ist, **dadurch gekennzeichnet,**
- **dass** die zwei Schlauchtrommeln (40, 50) und die Seilwinde (30) mittig entlang einer Längsachse der Trägereinheit (12) angeordnet sind und
- **dass** die Seilwinde (30) für das Tragseil (32) in Längsrichtung zwischen der ersten Schlauchtrommel (40) und der zweiten Schlauchtrommel (50) angeordnet ist.

2. Tiefbaumaschine nach Anspruch 1,
**dadurch gekennzeichnet,**
**dass** zumindest die zweite Schlauchtrommel (50) an dem Oberwagen (16) drehbar gelagert ist.

3. Tiefbaumaschine nach Anspruch 1 oder 2,
**dadurch gekennzeichnet,**
**dass** die erste Schlauchtrommel (40) in einer Mittenausnehmung (24) an dem Ausleger (20) drehbar gelagert ist.

4. Tiefbaumaschine nach einem der Ansprüche 1 bis 3,
**dadurch gekennzeichnet,**
**dass** an einem oberen Endbereich des Auslegers (20) mindestens eine Seilumlenkrolle (34) für das Tragseil (32) gelagert ist und
**dass** unterhalb der Seilumlenkrolle (34) eine erste Schlauchumlenkrolle (44) für die erste Schlauchleitung (42) und oberhalb der Seilumlenkrolle (34) eine zweite Schlauchumlenkrolle (54) für die zweite Schlauchleitung (52) gelagert ist.

5. Tiefbaumaschine nach einem der Ansprüche 1 bis 4,
**dadurch gekennzeichnet,**
**dass** die zweite Schlauchtrommel (50) in einer horizontalen Richtung nicht über die Umfangsabmessungen der Trägereinheit (12) hinausragt.

6. Tiefbaumaschine nach einem der Ansprüche 1 bis 5,
**dadurch gekennzeichnet,**
**dass** der Oberwagen (16) drehbar um eine Vertikalachse auf dem Unterwagen (14) gelagert ist.

7. Tiefbaumaschine nach einem der Ansprüche 1 bis 6,
**dadurch gekennzeichnet,**
**dass** mindestens eine Schlauchleitung (42, 52) als ein Schlauchband oder ein Schlauchbündel mit mehreren Leitungen (56) ausgebildet ist.

8. Tiefbaumaschine nach einem der Ansprüche 1 bis 7,
**dadurch gekennzeichnet,**
**dass** mindestens eine Schlauchleitung (42, 52) einen hohlen Schlauchinnenraum umfasst und insbesondere als Förderleitung ausgebildet ist.

9. Tiefbaumaschine nach einem der Ansprüche 1 bis 8,
**dadurch gekennzeichnet,**
**dass** der Unterwagen (14) ein Raupenfahrwerk aufweist.

10. Tiefbaumaschine nach einem der Ansprüche 1 bis 9,
**dadurch gekennzeichnet,**
**dass** das Arbeitsgerät (60) als eine Schlitzwandfräse (62) oder als ein Bohrgerät, insbesondere ein Imlochbohrgerät, ausgebildet ist.

11. Tiefbaumaschine nach einem der Ansprüche 1 bis 10,
**dadurch gekennzeichnet,**
**dass** die erste Schlauchleitung (42) zum Fördern von Hydraulikflüssigkeit und die zweite Schlauchleitung (52) zum Fördern einer Fräs- beziehungsweise Bohrflüssigkeit ausgebildet sind.

12. Tiefbaumaschine nach einem der Ansprüche 1 bis 11,
**dadurch gekennzeichnet,**
**dass** an dem Oberwagen (16) eine Tragbalkenanordnung (17) ausgebildet ist, an welcher die Seilwinde (30) und die zweite Schlauchtrommel (50) drehbar gelagert sind.

## Claims

1. Civil engineering machine, comprising
- a mobile carrier unit (12) which comprises an undercarriage (14) configured as a chassis, an upper structure (16) arranged thereon, and a boom (20) which is mounted so as to be pivotable about a horizontal pivot axis (22),
- a work tool (60) for civil engineering, which is suspended on the boom (20) in a vertically adjustable manner, by means of a support cable (32), wherein the support cable (32) can be actuated by means of a cable winch (30) on the carrier unit (12),
- a rotatable first hose reel (40) having a first hose line (42) which is guided from the first hose reel (40) to the work tool (60), and
- a rotatable second hose reel (50) having a second hose line (52) which is guided from the second hose reel (52) to the work tool (60), **characterized in that**
- the two hose reels (40, 50) and the cable winch (30) are arranged centrally along a longitudinal axis of the carrier unit (12), and
- the cable winch (30) for the support cable (32) is arranged between the first hose reel (40) and the second hose reel (50) in the longitudinal direction.

2. Civil engineering machine according to claim 1,
**characterized in that**
at least the second hose reel (50) is rotatably mounted on the upper structure (16).

3. Civil engineering machine according to claim 1 or 2, **characterized in that**
the first hose reel (40) is rotatably mounted in a central recess (24) on the boom (20).

4. Civil engineering machine according to any of claims 1 to 3, **characterized in that**
at least one cable deflection roller (34) for the support cable (32) is mounted at an upper end region of the boom (20), and
**in that** a first hose deflection roller (44) for the first hose line (42) is mounted underneath the cable deflection roller (34), and a second hose deflection roller (54) for the second hose line (52) is mounted above the cable deflection roller (34).

5. Civil engineering machine according to any of claims 1 to 4, **characterized in that**
the second hose reel (50) does not protrude beyond the peripheral dimensions of the carrier unit (12), in a horizontal direction.

6. Civil engineering machine according to any of claims 1 to 5, **characterized in that**
the upper structure (16) is mounted on the undercarriage (14) so as to be rotatable about a vertical axis.

7. Civil engineering machine according to any of claims 1 to 6, **characterized in that**
at least one hose line (42, 52) is configured as a hose strap or a hose bundle comprising a plurality of lines (56).

8. Civil engineering machine according to any of claims 1 to 7, **characterized in that**
at least one hose line (42, 52) comprises a hollow hose interior and is configured, in particular as a delivery line.

9. Civil engineering machine according to any of claims 1 to 8, **characterized in that**
the undercarriage (14) comprises a crawler chassis.

10. Civil engineering machine according to any of claims 1 to 9, **characterized in that**
the work tool (60) is configured as a trench cutter (62) or as a drill, in particular as a down-the-hole drill.

11. Civil engineering machine according to any of claims 1 to 10, **characterized in that**
the first hose line (42) is configured for conveying hydraulic fluid, and the second hose line (52) is configured for conveying a cutting or drilling fluid.

12. Civil engineering machine according to any of claims 1 to 11, **characterized in that**
a girder assembly (17) is formed on the upper structure (16), on which the cable winch (30) and the second hose reel (50) are rotatably mounted.

## Revendications

1. Engin de génie civil comprenant
- une unité de support (12) mobile qui comprend un châssis porteur (14) conçu comme un train de roulement, un châssis tournant (16) disposé sur celui-ci, et une flèche (20) montée de manière à pouvoir pivoter autour d'un axe de pivotement horizontal (22),
- un appareil de travail (60) pour le génie civil, qui est accroché à la flèche (20) de manière réglable verticalement au moyen d'un câble porteur (32), le câble porteur (32) pouvant être actionné au moyen d'un treuil à câble (30) situé sur l'unité de support (12),
- un premier tambour à tuyau (40) rotatif, ayant un premier conduit en tuyau (42) qui mène du premier tambour à tuyau (40) vers l'appareil de travail (60), et
- un deuxième tambour à tuyau (50) rotatif, ayant un deuxième conduit en tuyau (52) qui mène du deuxième tambour à tuyau (52) vers l'appareil de travail (60),
**caractérisé en ce que**
- les deux tambours à tuyau (40, 50) et le treuil à câble (30) sont disposés au milieu le long d'un axe longitudinal de l'unité de support (12), et
- **en ce que** le treuil à câble (30) pour le câble porteur (32) est disposé entre le premier tambour à tuyau (40) et le deuxième tambour à tuyau (50) dans la direction longitudinale.

2. Engin de génie civil selon la revendication 1,
**caractérisé en ce que**
au moins le deuxième tambour à tuyau (50) est monté de manière à pouvoir tourner sur le châssis tournant (16).

3. Engin de génie civil selon la revendication 1 ou 2,
**caractérisé en ce que**
le premier tambour à tuyau (40) est monté de manière à pouvoir tourner dans un évidement central (24) situé dans la flèche (20).

4. Engin de génie civil selon l'une des revendications 1 à 3,
**caractérisé en ce que**
au moins une poulie de renvoi de câble (34) pour le câble porteur (32) est montée sur une zone d'extrémité supérieure de la flèche (20), et
**en ce qu'**en dessous de la poulie de renvoi de câble (34) est montée une première poulie de renvoi de tuyau (44) pour le premier conduit en tuyau (42), et **en ce qu'**au-dessus de la poulie de renvoi de câble (34) est montée une deuxième poulie de renvoi de tuyau (54) pour le deuxième conduit en tuyau (52).

5. Engin de génie civil selon l'une des revendications 1 à 4,
**caractérisé en ce que**
le deuxième tambour à tuyau (50) ne dépasse pas, dans une direction horizontale, les dimensions périphériques de l'unité de support (12).

6. Engin de génie civil selon l'une des revendications 1 à 5,
**caractérisé en ce que**
le châssis tournant (16) est monté sur le châssis porteur (14) de manière à pouvoir tourner autour d'un axe vertical.

7. Engin de génie civil selon l'une des revendications 1 à 6,
**caractérisé en ce que**
au moins un conduit en tuyau (42, 52) est conçu comme une bande de tuyaux ou comme un faisceau de tuyaux, présentant plusieurs conduits (56).

8. Engin de génie civil selon l'une des revendications 1 à 7,
**caractérisé en ce que**
au moins un conduit en tuyau (42, 52) comprend un espace intérieur creux et est conçue en particulier comme un conduit de transport.

9. Engin de génie civil selon l'une des revendications 1 à 8,
**caractérisé en ce que**
le châssis porteur (14) comprend un train de roulement à chenilles.

10. Engin de génie civil selon l'une des revendications 1 à 9,
**caractérisé en ce que**
l'appareil de travail (60) est conçu comme une fraiseuse pour parois moulées (62) ou comme un appareil de forage, en particulier comme un appareil de forage fond de trou.

11. Engin de génie civil selon l'une des revendications 1 à 10,
**caractérisé en ce que**
le premier conduit en tuyau (42) est conçu pour transporter un liquide hydraulique, et le deuxième conduit en tuyau (52) est conçu pour transporter un liquide de fraisage ou de forage.

12. Engin de génie civil selon l'une des revendications 1 à 11,
**caractérisé en ce que**
un ensemble de poutre de support (17) est formé sur le châssis tournant (16), sur lequel le treuil à câble (30) et le deuxième tambour à tuyau (50) sont montés de manière à pouvoir tourner.
